# EUROPEAN PATENT APPLICATION

(11) **EP 4 831 905 A1**
(43) Date of publication of application: **28.10.2026**
(21) Application number: 25300051.7
(22) Date of filing: 24.04.2025
(51) Int. Cl.: G06Q 50/40, G06N 20/00, G07C 5/08

(54) **HANDLING AN AUTOMATED TRANSPORT SYSTEM**

(71) Applicant: Volvo Autonomous Solutions AB, 405 08 Göteborg (SE)
(72) Inventor: Georgiadis, Giorgos, 418 75 Göteborg (SE)
(74) Representative: Valea AB

(57) **Abstract**

A computer system (700) comprising processing circuitry (702) configured to handle an Autonomous Transport System, ATS, (101) is provided. The ATS (101) is arranged to manage a plurality of autonomous vehicles (1) operating at a work site (100). The processing circuitry (702) is configured to receive a natural language input indicative of an issue associated with the ATS (101). The processing circuitry (702) is configured to interpret the issue associated with the ATS (101). The processing circuitry (702) is configured to obtain system data of the ATS (101). The processing circuitry (702) is configured to, based on the interpreted issue and the system data, establish a diagnosis of a fault associated with the interpreted issue and/or establish an action plan for handling the interpreted issue.

## Description

### TECHNICAL FIELD

The disclosure relates generally to handling an Automated Transport System (ATS). In particular aspects, the disclosure relates to receiving a natural language input indicative of an issue associated with the ATS, and interpreting the issue. According to some particular aspects, a diagnosis of a fault associated with the issue and/or an action plan for handling the interpreted issued is established.

The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

ATS is a system at least comprising of a number of autonomous vehicles operating at a work site. Typically the ATS comprises a number of different components such as autonomous vehicles, other components may include infrastructure of the work site, control systems or traffic systems, etc. The ATS may further be associated with any specific application performed in the work site, such as how the vehicles therein shall operate. In other words, ATS may generally be defined as any system configured to manage autonomous vehicles in a work site, and wherein the ATS is typically implemented as part of a computer system.

A problem when managing autonomous vehicles is that if a fault occurs, the vehicles or site may need to shut down and/or the vehicles may need to operate in degraded modes with reduce efficiency of the work site and productivity of the vehicles.

Existing solutions involve manual diagnosis processes. Such processes are time-consuming, prone to human error and/or requires specialized knowledge. This means that shut down or degraded modes may still occur.

Hence, there is a strive to improve fault handling of an ATS.

### SUMMARY

The disclosure herein generally relates to ATS. Particular aspects may relate to fault diagnosis of the ATS.

As part of developing examples herein, problems with diagnostics relating to ATS have been identified. For example, to detect faults in work sites where autonomous vehicle operates, typically in-vehicle diagnostics and in-vehicle fault detection methods are deployed. While these methods may be able to find faults, they will only be able to find certain specific faults and may not be suitable for finding faults with the ATS on a system level. This is particularly true when a large number of components are interacting the ATS, in particular when many of them do not have built-in diagnostics or fault detection methods. System level as used herein may mean some fault that affects more than one vehicle or entity of a work site.

Existing diagnosis processes may be able to find some faults, but since they do not consider available system data, they will not be able to identify all faults. There is also a lack of intuitive interfaces for non-specialized operators to interact with ATS for diagnostics purposes.

According to a first aspect of the disclosure, a computer system comprising processing circuitry configured to handle an ATS is provided. The ATS is arranged to manage a plurality of autonomous vehicles operating at a work site.

The processing circuitry is configured to receive a natural language input indicative of an issue associated with the ATS. The natural language input is typically a voice input by a user, such as an operator of the ATS. The natural language input is not limited to voice input as any natural language may apply such as written language or sign language. The natural language input can however also be provided by any suitable automated entity, such as an Artificial Intelligence (AI) agent.

The processing circuitry is configured to interpret from the natural language input, by using a machine learning model at least partly trained to handle natural language inputs, the issue associated with the ATS.

The processing circuitry is configured to obtain system data of the ATS. The system data is indicative of at least one of: a system architecture of the ATS, runtime information of one or more components of the ATS, and a relationship information between the one or more components.

The processing circuitry is configured to, based on the interpreted issue and the system data, establish a diagnosis of a fault associated with the interpreted issue and/or establish an action plan for handling the interpreted issue.

The first aspect of the disclosure may seek to improve fault handling of an ATS.

A technical benefit may include improved accuracy of diagnosing the fault and/or mitigating an effect of the fault. This is since the issue can be inputted using a natural language such as by a voice input by a user. The issue can be interpreted and with the use of the obtained system data, it is possible to establish a diagnosis of the fault and/or to establish an action plan for handling the issue. The action plan may be an action plan for handling the fault, or preferably, when further information is needed, the action plan may be a plan for handling the diagnosis of the fault. For example, the action plan may indicate tests to run to improve the accuracy of the diagnosis, information to be obtained to improve the accuracy of the diagnosis, and/or queries regarding the issue to improve the accuracy of the diagnosis.

In examples herein, establishing the diagnosis and/or the action plan based on both the system data and the interpreted issue may mean that the issue can be compared with, and/or accounted for the system data of the ATS. In some examples, there may be a deviation in the system data and the issue which may be used to diagnose the fault. In some examples, establishing the diagnosis and/or action plan may be inferred based on that the interpreted issue must, in view of the system data, relate to one or more specific faults, and hence these can be diagnosed and/or handled by the action plan.

Optionally in some examples, including in at least one preferred example, the processing circuitry is further configured to provide the established diagnosis and/or action plan to a feedback entity. In this way, the feedback entity is enabled to, for instance via a user interface, provide feedback to the established diagnosis, if needed. If the action plan is indicative of a need for any further information such as a request for a certain information and/or a request for the feedback entity to investigate any aspect of the ATS, then the feedback entity is notified of such a need.

The feedback entity is typically a user, e.g., the same user providing the natural language request. The feedback entity may be an operator of the ATS.

In some of these examples, the processing circuitry is configured to receive a response from the feedback entity. The response may be indicative of feedback information of the diagnosis and/or the action plan. The feedback information may comprise any suitable feedback on the diagnosis and/or the action plan such as more information regarding the issue, e.g., which may be requested by the action plan, and/or information on the correctness of the diagnosis. The feedback information may be indicative of whether or not there is a need to re-establish the diagnosis and/or to re-establish the action plan.

A technical benefit may include improved fault handling of the ATS, this is since it is enabled to refine the diagnosis and/or action plan based on feedback, for instance provided via a user interface, from the feedback entity. Another technical benefit may be that it may be possible to train a model on whether or not the diagnosis is correct or not.

Optionally in some examples, including in at least one preferred example, the processing circuitry is further configured to: based on the feedback information, re-establish the diagnosis of the fault associated with the interpreted issue and/or to re-establish action plan for handling the interpreted issue. To exemplify, the issue may be an issue in the ATS perceived by a user. The following diagnosis may indicate a general probable fault associated with the issue and/or the action plan may indicate how to refine the diagnosis and/or how to handle the general probable fault. The feedback entity may then supply feedback information which may indicate if the diagnosis seems correct or not, or if some more information can be provided which can further improve the diagnosis. Additionally or alternatively, the feedback may be with respect to the action plan, e.g., commenting on the effectiveness or feasibility of the action plan and/or supplying information requested by the action plan. The information is therefore at least implicitly indicative of whether or not there is a need to re-establish the diagnosis and/or to re-establish the action plan. When there is such a need, guided by the feedback information, the diagnosis and/or action plan may be re-established to be more accurate or directed towards the correct type of fault.

A technical benefit may include improved fault handling of the ATS, this is since the diagnosis can be re-established to be more accurate and/or the action plan can be re-established to better handle the fault or to be established to better assist with a diagnosis.

Optionally in some examples, including in at least one preferred example, re-establishing the diagnosis and/or re-establishing the action plan is performed iteratively until a termination condition. In some of these examples, re-establishing the diagnosis and/or re-establishing the action plan comprises iteratively obtaining updated feedback information from the feedback entity. In other words, the diagnosis and/or action plan may iterate with feedback from the feedback entity until the terminating conditions, such as when the feedback entity acknowledges that the diagnosis and/or action plan is/are sufficiently accurate. The iteration may comprise establishing diagnosis and/or action plan and the feedback entity supplies more information in response in an iterative manner to reach a conclusive diagnosis or suitable action plan.

A technical benefit may include improved fault handling of the ATS, this is since the diagnosis and/or action plan can be established to be more accurate with regards to the fault of the ATS.

Optionally in some examples, including in at least one preferred example, the terminating condition comprises that the feedback information indicates an approval by the feedback entity .

A technical benefit may include improved fault handling of the ATS, this is since the feedback entity may be able to confirm, e.g., by tests indicated by the action plan, that the diagnosis is correct and/or that the action plan is the most appropriate to handle the fault.

Optionally in some examples, including in at least one preferred example, when the feedback information is indicative of that the diagnosis and/or action plan is approved, at least one of the following may be triggered:
- compiling of a report indicative of the diagnosis and/or the action plan, and/or
- an execution of the action plan.

A technical benefit may include improved fault handling of the ATS, this is since the report may be used to notify any suitable entity of the work site of the fault such that any affected work tasks can account for the fault and/or the action plan may mitigate effects of the fault and/or improve accuracy of the diagnosis.

Optionally in some examples, including in at least one preferred example, the system data is further indicative of at least one of:
- historical and/or current runtime data of the ATS,
- an Application Programming Interface (API) of the ATS,
- implementation information of the ATS,
- a codebase of the ATS, and
- documentation of the ATS .

A technical benefit may include improved fault handling of the ATS, this is since any of the above-mentioned system data may describe at least some expected behavior and/or implementation of the ATS. This means that the system data can further provide insights into the fault in view of the interpreted issues. For example, implementation information of the autonomous vehicles may be considered in view of the interpreted issue to improve accuracy of the diagnosis and/or to improve the action plan.

Optionally in some examples, including in at least one preferred example, the one or more components comprises at least one of:
- the plurality of autonomous vehicles,
- one or more infrastructure entities of the work site,
- one or more control systems of the ATS and/or the work site, and
- one or more traffic systems of the work site.

A technical benefit may include improved fault handling of the ATS, this is since any suitable component of the ATS may be considered, thereby allowing for fault handling of the complete ATS. Due to dependencies, diagnosing a fault in the traffic systems may also involve how to handle the vehicles, infrastructure, or control systems, and hence, any fault may be necessary to diagnose accurately or handle efficiently.

Optionally in some examples, including in at least one preferred example, establishing the diagnosis and/or the action plan comprises analyzing the runtime information of the one or more components with associated program code of the one or more components.

A technical benefit may include improved fault handling of the ATS, this is since the program code may indicate how the one or more components shall act, and comparing such information with the runtime indication improves accuracy in diagnosing the fault and/or a detailed action plan can be established. Similarly, instead of the code base, any other information of implementation or system architecture of the ATS may be compared with the runtime information.

Optionally in some examples, including in at least one preferred example, establishing the diagnosis and/or the action plan comprises analyzing the runtime information of the one or more components and relationship information between the one or more components. The relationship information may indicate any suitable relationship between the one or more components such as how the different autonomous vehicles shall operate with regards to another vehicle.

A technical benefit may include improved fault handling of the ATS, this is since the runtime information can be compared with the relationship information to improve accuracy in diagnosing the fault and/or used as a basis for establishing a more detailed action plan.

Optionally in some examples, including in at least one preferred example, as also discussed above, the natural language request is received as input by a voice command.

A technical benefit may include improved fault handling of the ATS, this is since a user can easily express the issue with the ATS and the diagnosis and/or action plan can be generated in response. This allows a user to freely express the issues at hand without having to have any specific technical knowledge and does not need to manage any technical interface.

Optionally in some examples, including in at least one preferred example, the computer system is configured to at least partly utilize a Large Language Model, LLM, to perform at least one of: receive the natural language input, interpret the issue, obtain the system data, establish the diagnosis, and establish the action plan.

In other words, the LLM may be arranged as an AI agent to perform any one or more actions of examples herein.

A technical benefit may include improved fault handling of the ATS, this is since the LLM may be able to improve efficiency in any of the actions, and may in particular be able to establish the diagnosis and/or action plan based on the system data and the interpreted issue by the LLM having full system data access of the ATS. While some of the data has been mentioned, increasing amount of data allows the LLM to more accurately diagnose the fault and to better establish the action plan.

Optionally in some examples, including in at least one preferred example, the computer system comprises at least part of and/or is configured to control the ATS.

According to a second aspect of the disclosure, an autonomous vehicle at least partly comprising and/or at least partly being controlled by the computer system according to the first aspect is provided.

According to a third aspect of the disclosure, a computer-implemented method for handling an ATS is provided. The ATS is arranged to manage a plurality of autonomous vehicles operating at a work site.

The method comprises, by a processing circuitry of a computer system, receiving a natural language input indicative of an issue associated with the ATS.

The method comprises, by the processing circuitry, interpreting from the natural language input, by using a machine learning model at least partly trained to handle natural language inputs, the issue associated with the ATS.

The method comprises, by the processing circuitry, obtaining system data of the ATS. The system data is indicative of at least one of: a system architecture of the ATS, runtime information of one or more components of the ATS, and a relationship information between the one or more components.

The method comprises, by the processing circuitry and based on the interpreted issue and the system data, establishing a diagnosis of a fault associated with the interpreted issue and/or establish an action plan for handling the interpreted issue.

Optionally in some examples, including in at least one preferred example, the method may comprise, by the processing circuitry, providing the established diagnosis and/or action plan to a feedback entity.

In some of these examples, the method comprises, by the processing circuitry, receiving a response from the feedback entity indicative of feedback information of the diagnosis and/or the action plan, the feedback information being indicative of whether or not there is a need to re-establish the diagnosis and/or to re-establish the action plan.

Optionally in some examples, including in at least one preferred example, the method comprises, by the processing circuitry and based on the feedback information, re-establishing the diagnosis of the fault associated with the interpreted issue and/or to re-establish action plan for handling the interpreted issue.

Optionally in some examples, including in at least one preferred example, re-establishing the diagnosis and/or re-establishing the action plan is performed iteratively until a termination condition. In some of these examples, re-establishing the diagnosis and/or re-establishing the action plan comprises iteratively obtaining updated feedback information from the feedback entity .

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary work site according to an example.
**FIG. 2** is a flow chart of an exemplary method according to an example.
**FIG. 3** illustrates an example scenario.
**FIG. 4** illustrates an example scenario.
**FIG. 5** is another view of **FIG. 1****,** according to an example.
**FIG. 6** is a flow chart of an exemplary method according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

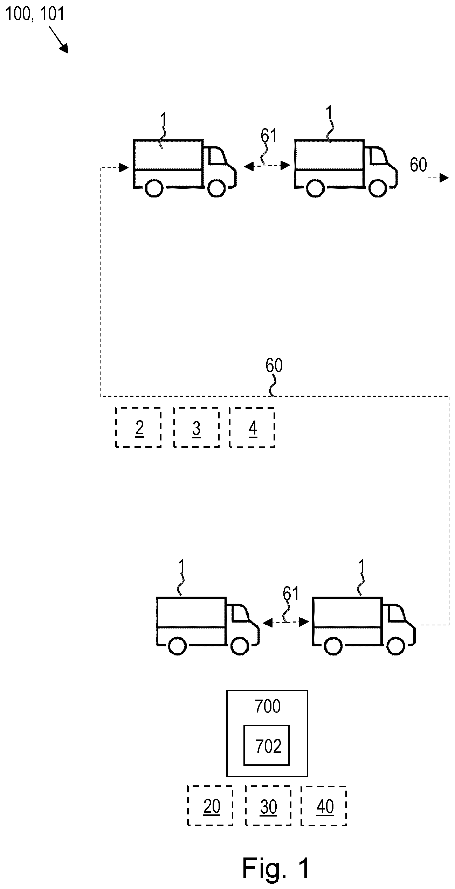

**FIG. 1** illustrates an exemplary **work site 100** according to an example.

In examples herein, an **ATS 101** is arranged to manage a plurality of **autonomous** vehicles 1 operating at the work site 100.

In examples herein, any one or more vehicles may be part of the plurality of autonomous vehicles 1.

The ATS 101 may be a system for managing any suitable transporting aspects of the work site 100.

The ATS 101 may comprise **one or more components 1, 2, 3, 4,** such as the autonomous vehicles 1.

The one or more components 1, 2, 3, 4 may comprise at least one of:
- **the plurality of autonomous vehicles 1,**
- **one or more infrastructure entities 2** of the work site 100, e.g., at least one of: a barrier, a road, a charging station, a fueling station, a maintenance area, unloading/loading areas, etc.
- **one or more control systems 3** of the ATS 101 and/or the work site 100, e.g., any suitable control system for controlling the ATS 101 and/or at least one of the one or more components 1, 2, 3, 4, and
- **one or more traffic systems 4** of the work site 100, e.g., traffic lights and/or any suitable system for handling traffic of the vehicles 1.

Additionally or alternatively, the one or more traffic system 4 may comprise any suitable traffic signals of the work site 100.

Additionally or alternatively, the one or more traffic system 4 may comprise a traffic monitoring system, e.g., a centralized traffic monitoring system. The traffic monitoring system may comprise one or more control stations arranged to coordinate movement of the autonomous vehicles 1 through the work site 100.

The ATS 101 may comprises any suitable entities for handling the one or more components 1, 2, 3, 4, such as the autonomous vehicles 1 in the work site 100. The ATS 101 may comprise hardware and/or software systems for handling the one or more components 1, 2, 3, 4.

In examples herein, the vehicles 1 may be arranged to travel along **one or more routes 60,** e.g., as part of an application of the ATS 101 such as travel to and from locations for transporting and/or loading/unloading goods and/or passengers. The one or more routes 60 may interact with the one or more infrastructure entities 2 and/or the one or more traffic systems 4.

Optionally, the one or more route 60 may be controlled by the one or more control systems 3. Additionally or alternatively, the one or more control systems 3 may control the one or more infrastructure entities 2 and/or the one or more traffic systems 4.

The ATS 101 may comprise automated and/or manual processes for handling the one or more components 1, 2, 3, 4.

The ATS 101 may comprise a **user interface 30** for receiving input and/or for providing output such as one or more reports and/or for communicating with and/or for controlling the one or more components 1, 2, 3, 4.

The user interface 30 may be any suitable user interface and may comprise any suitable interfaces for input and/or output such as any one or more out of : a display, a speaker, a microphone, a communication bus, a wireless or wired communication interfaces, a keyboard, a camera, etc.

Examples herein relate to receiving a natural language input indicative of an issue associated with the ATS 101. The input may be provided by a **user 20,** e.g., by the user interface 30. The user 20 may be an operator of the ATS 101.

The ATS 101 may comprise system data, e.g., representative of any suitable implementation of the ATS 101 and/or any current state of the ATS 101. As one example, the system data may comprise at least one of: a system architecture of the ATS 101, runtime information of one or more components 1, 2, 3, 4 of the ATS 101, and a relationship information between the one or more components 1, 2, 3, 4.

The system architecture of the ATS 101 may comprise information of the one or more components 1, 2, 3, 4, any other suitable hardware or software, associated program code, configurations, etc.

The runtime information of one or more components 1, 2, 3, 4 of the ATS 101 may indicate how the one or more components 1, 2, 3, 4 operate, e.g., over a set period of time.

The relationship information between the one or more components 1, 2, 3, 4 may indicate some relationship, e.g., an order of how vehicles of the autonomous vehicles 1 shall travel in the work site 100 as exemplified in FIG. 1 by a distance 61, and/or which of the one or more control systems 3 shall control which of the other one or more components 1, 2, 3, 4 and/or in what time order one or more traffic lights of the one or more traffic systems 4 shall allow traffic.

Examples herein may relate to establishing a diagnosis and/or an action plan. The diagnosis and/or an action plan may be based on the system data of the ATS 101 as well as an issue provided by the natural language input.

Such an established diagnosis and/or action plan may be provided to a **feedback entity 40,** e.g., via the user interface 30. In examples herein, the feedback entity 40 may provide a response indicative of feedback information of the diagnosis and/or the action plan. The feedback information may be indicative of whether or not there is a need to re-establish the diagnosis and/or to re-establish the action plan. Any other feedback information may apply.

The feedback entity 40 is typically a user such as the user 20. However, the feedback entity 40 may also be any suitable automated system such as an AI agent.

In examples herein the diagnosis and/or the action plan is established by an LLM and/or an AI agent by input of an issue by the user 20 and with feedback from the feedback entity 40, e.g., the user 20, until a fault is accurately diagnosed and/or until an acceptable plan for handling the issue or fault has been established.

The autonomous vehicles 1 may respectively be any suitable vehicle 1, e.g., a truck, a car, a bus, a heavy-duty vehicle, a marine vessel, a combination vehicle towing one or more trailers, etc.

Autonomous as used herein may mean that the vehicles 1 may at least partly be controlled in an automated manner, such as operating without explicit control by a user. The ATS 101 may be able to control the vehicles 1.

In some examples, the computer system 700 and/or the processing circuitry 702 may be comprised in any suitable location such as at and/or near the work site 100 and/or at a location remote from the vehicles 1, e.g., in a server or part of a cloud service, or may be part of a distributed system such as part of the vehicles 1.

The computer system 700 and/or the processing circuitry 702 therein may control and/or comprise at least part of the ATS 101. In practice, the computer system 700 and/or the processing circuitry 702 therein may essentially be or represent the ATS 101, at least with regards to all of the hardware and/or software aspects of the ATS 101. As discussed above, the ATS 101 may further include manual processes and/or aspects which are not possible to be part of the computer system 700.

The computer system 700 and/or the processing circuitry 702 therein may control and/or communicate with any suitable aspect or entity of the ATS 101. The computer system 700 and/or the processing circuitry 702 therein may control and/or communicate with any one or more of the one or more components 1, 2, 3, 4, e.g., the autonomous vehicles 1.

In examples herein, any one or more of the examples, e.g., which are not performed by a user 20, 40 such as providing input/feedback, may be performed by an AI agent power by a Large Language Model (LLM). The LLM-powered AI agent may serve as a natural language interface for a site operator of the ATS 101 and/or work site 100. The site operator may be the user 20 and/or the feedback entity 40. The AI agent and/or the LLM may allow the site operator to describe one or more issues in the work site 100 and/or with the ATS 101 in their own words. The AI agent and/or the LLM can interpret the issue and understand any provided descriptions or features, and may further access any relevant system data and/or functions of the ATS 101, and may use such information for diagnosing faults, assist in diagnosing faults and/or may establish an action plan related to the issue or faults.

The use of the AI agent and/or the LLM may provide a flexible, efficient, and intuitive manner to perform fault diagnosis for the ATS 101. Furthermore, system level information may be utilized for diagnosing the fault, e.g., code base, ATS implementation, etc. This allows for more effective use of system data and resources, and does not require specialized knowledge as only a perceived issue may need to be provided.

The LLM of examples herein may further have been trained on at least one of: system data of the ATS 101, issues perceived with the ATS 101, and/or diagnosed faults of the ATS 101.

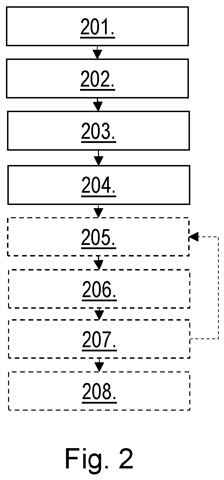

**FIG. 2** is a flow chart of an exemplary method for handling the ATS 101. The ATS 101 is arranged to manage the plurality of autonomous vehicles 1 operating at the work site 100. The ATS 101 may further be arranged to manage any one or more of the one or more components 1, 2, 3, 4.

The method may be performed by the computer system 700 and/or the processing circuitry 702 therein.

The method may at least partly be performed by an LLM comprised in the computer system 700. The LLM may be an AI agent and/or the method may at least partly be performed by an AI agent with the use of the LLM.

The method may comprise the following actions performed in any suitable order. Dashed boxes in FIG. 2 may indicate optional actions.

**Action 201.** The method comprises receiving a natural language input indicative of an issue associated with the ATS 101.

The input may be provided as a voice input. In other words, the natural language request may be received as input by a voice command..

The input may be provided by the user 20.

The input may be an issue perceived by the user 20, such as at least one of:
- at least one vehicle of the vehicles 1 has stopped,
- at least one vehicle of the vehicles 1 does not perform a certain action and/or is not finishing a task,
- at least one vehicle of the vehicles 1 is associated with poor performance,
- at least one vehicle of the vehicles 1 is driving very slowly and/or is operating inconsistently ,
- at least one vehicle of the vehicles 1 such as all or at least a plurality of the vehicles 1 is/are not maintaining proper spacing or sequencing,
- at least one vehicle of the vehicles 1 such as all or at least a plurality of the vehicles 1 is/are repeatedly stopping at the same location without an apparent reason,
- a charging station is not properly engaging with at least one of the vehicles 1,
- one or more traffic lights, e.g., of the one or more traffic systems 4, are changing patterns unexpectedly,
- loading/unloading operations of at least one the vehicles 1 such as all or at least a plurality of the vehicles 1 is/are taking longer than expected, and
- at least one vehicle of the vehicles 1 such as all or at least a plurality of the vehicles 1 is/are deviating from their respective designated routes.

The above-mentioned issues are just a few examples of possible issues that could be perceived and inputted by the user 20.

The input may be received via the user interface 30.

The computer system 700 may be configured to least partly utilize the LLM to receive the natural language input.

**Action 202.** The method comprises interpreting from the natural language input, by using a machine learning model at least partly trained to handle natural language inputs, the issue associated with the ATS 101.

The machine learning model may be the LLM.

For example, the input provided as a voice input may be interpreted to text and/or interpreted into any suitable model which can be handled by the LLM.

The computer system 700 may be configured to least partly utilize the LLM to interpret the issue.

**Action 203.** The method comprises, obtaining system data of the ATS 101. The system data being is of at least one of: a system architecture of the ATS 101, runtime information of one or more components 1, 2, 3, 4 of the ATS 101, and a relationship information between the one or more components 1, 2, 3, 4.

The runtime information of one or more components 1, 2, 3, 4 of the ATS 101 may indicate how the one or more components 1, 2, 3, 4 operate, e.g., over a set period of time.

The runtime information may indicate how components of the one or more components 1, 2, 3, 4 may operate over a specific time period. The runtime information may be indicative of at least one of: temporal patterns, performance trends, and operational history. This time dimension may be important for accurately detecting at least one of: intermittent issues, degradation patterns, and correlating events across the ATS 101.

The relationship information between the one or more components 1, 2, 3, 4 may indicate some relationship, e.g., an order of how vehicles of the autonomous vehicles 1 shall travel in the work site 100, and/or which of the one or more control systems 3 shall control which of the other one or more components 1, 2, 3, 4 and/or in what time order one or more traffic lights of the one or more traffic systems 4 shall allow traffic.

The relationship information between components of the one or more components 1, 2, 3, 4 may indicate operational dependencies, such as the required sequencing of vehicles of the plurality of vehicles 1 through at least one of: loading zones, minimum safe distances between vehicles, e.g., as shown by distance 61, prioritization rules at intersections, charging station allocation protocols, control system authority boundaries, and communication dependencies between vehicles and infrastructure components.

While some examples are indicated above, the system data may be any suitable system data of the ATS 101 which describes the ATS 101 with regards to static and/or dynamic system data. The system data may indicate how the ATS 101 is implemented and/or current status of at least some aspect of the ATS 101.

In most implementations, the system data may comprise any one or more suitable data of the ATS 101.

Additionally or alternative from the definition above, the system data may be indicative of at least one of:
- historical and/or current runtime data of the ATS 101, e.g., runtime information of at least one of the one or more components 1, 2, 3, 4, such as at least one of the autonomous vehicles 1,
- an Application Programming Interface (API) of the ATS 101,
- implementation information of the ATS 101,
- a codebase of the ATS 101, e.g., which may comprise program code of at least one of the one or more components 1, 2, 3, 4, such as at least one of the autonomous vehicles 1, and
- documentation of the ATS 101.

The computer system 700 may be configured to least partly utilize the LLM to obtain the system data.

**Action 204.** The method comprises, based on the interpreted issue and the system data, establishing a diagnosis of a fault associated with the interpreted issue and/or establish an action plan for handling the interpreted issue.

The diagnosis may indicate the fault of the interpreted issue. For examples, if the issue is that multiple vehicles of the vehicles 1 are stopping at the same geographical location of the work site 100 but at different times, the diagnosis may be that there is an electromagnetic interference source at that location affecting the vehicles' navigation systems, as determined by analyzing the pattern of stops and the electronic components used in the vehicles' guidance systems.

The diagnosis may be able to establish by considering the system data. More data of the system data may improve accuracy of the diagnosis.

The action plan may be a plan to handle the fault. Additionally or alternatively, the action plan may be a plan to gather more information such that the fault can be more accurately diagnosed, e.g., if the diagnosis cannot be made with high accuracy or confidence.

The action plan may indicate that more information is needed, e.g., by providing questions and/or request for information to the feedback entity 40.

As an example, if the issue is unexpected delays in vehicle movements of the vehicles 1 at certain locations, then the action plan may request the feedback entity 40 to confirm if there have been any recent changes to the physical infrastructure of the work site 100 and/or to request the feedback entity to provide information about any new equipment operating near the affected areas of the work site 100 that might cause electromagnetic interference.

The computer system 700 may be configured to least partly utilize the LLM to establish the diagnosis and/or to establish the action plan.

As an example, establishing the diagnosis and/or the action plan may comprise analyzing the runtime information of the one or more components 1, 2, 3, 4 with associated program code of the one or more components 1, 2, 3, 4. In other words, establishing the diagnosis and/or the action plan may be based on the runtime information and the associated program code. For example, if the runtime information indicates that a behavior of the ATS 101 related to the interpreted issue deviates from the program code, a fault may be diagnosed. Also, any behavior of the runtime information may also potentially be explained by the program code, thereby the fault maybe be accurately diagnosed. The program code may be for the ATS 101 and may be code indicative of an application cycle for the autonomous vehicles 1.

As an example, if the program code specifies that the vehicles 1 should maintain a certain distance from each other during operation, e.g., the distance 61, but the runtime information shows vehicles clustering too closely together in specific areas of the work site 100, this deviation from expected behavior may indicate a fault in vehicle spacing control algorithms and/or in sensors responsible for detecting inter-vehicle distances of the vehicles 1.

Additionally or alternatively, as another example, establishing the diagnosis and/or the action plan may comprise analyzing the runtime information of the one or more components 1, 2, 3, 4 and relationship information between the one or more components 1, 2, 3, 4. In other words, establishing the diagnosis and/or the action plan may be based on the runtime information and the relationship information. For example, the runtime information may indicate that a behavior of the ATS 101 related to the interpreted issue may deviate from the relationship information. Also, any behavior of the runtime information may also potentially be explained by the relationship information, thereby the fault may be accurately diagnosed. The relationship information may for example be a relationship or dependency between the one or more components 1, 2, 3, 4, such as an order of how the vehicles 1 shall travel in the work site 100.

As one example, the issue as in action 201 may be that at least one of the vehicles 1 has stopped, and the diagnosis may be that there is lost connectivity, e.g., deduced by considering the program code of the vehicles and/or ATS 101 and/or runtime information of the vehicles 1 and/or the ATS 101. If there is not sufficient system data to establish the diagnosis accurately, then the action plan may be established to further obtain necessary information to accurately diagnose the fault.

In examples herein, the diagnosis and/or the action plan may be established based on at least one of: analysis of the one or more components 1, 2, 3, 4, relational dependencies between the one or more components 1, 2, 3, 4; and pattern detecting in the system data, e.g., with respect to known patterns which may indicate certain faults of the ATS 101.

**Action 205.** The method may comprise providing the established diagnosis and/or action plan to the feedback entity 40.

The established diagnosis and/or action plan may be provided to the feedback entity 40 via the user interface 30, e.g., represented as text, graphics and/or audio to the feedback entity 40.

In this way, the feedback entity 40 may provide feedback such that the established diagnosis and/or action plan can be approved and/or re-established if needed.

The computer system 700 may be configured to least partly utilize the LLM to provide the established diagnosis and/or action plan to the feedback entity 40.

**Action 206.** The method may comprise receiving a response from the feedback entity 40.

The response may be indicative of feedback information of the diagnosis and/or the action plan.

The feedback information may be indicative of whether or not there is a need to re-establish the diagnosis and/or to re-establish the action plan.

As an example, the feedback information may be an approval of the diagnosis and/or the action plan. Alternatively, the feedback information may be an indication of that the diagnosis is wrong and/or that the action plan is not feasible.

The feedback information may comprise information requested by the action plan and/or information complementing the diagnosis.

The feedback information may comprise information which may have not been considered when establishing the diagnosis and/or action plan, such as further details of the issue and/or a current state of the ATS 101.

The computer system 700 may be configured to least partly utilize the LLM to receive the response from the feedback entity 40.

In some examples, when the feedback information indicates anything but an approval, then the feedback information may be deemed to indicate that there is a need to re-establish the diagnosis and/or to re-establish the action plan.

The feedback information may be received by any suitable input such as text or a voice command, e.g., via the user interface 30.

**Action 207.** The method may comprise, based on the feedback information, re-establishing the diagnosis of the fault associated with the interpreted issue and/or to re-establish action plan for handling the interpreted issue.

Re-establishing the diagnosis and/or re-establishing the action plan may be performed iteratively until a termination condition.

Re-establishing the diagnosis and/or re-establishing the action plan may comprise iteratively obtaining updated feedback information from the feedback entity 40, e.g., by iterating Actions 205-207. Re-establish the diagnosis and/or re-establish the action plan may be performed as in action 204, accounting for the feedback information.

The re-established diagnosis and/or action plan may be more refined as compared to a previous iteration and/or may be different from a previous iteration of establishing diagnosis and/or action plan.

The terminating condition may be that the feedback information indicates an approval by the feedback entity 40.

The computer system 700 may be configured to least partly utilize the LLM to re-establish the diagnosis and/or re-establish the action plan.

**Action 208.** The method may comprise, when the feedback information is indicative of that the diagnosis and/or action plan is approved, triggering at least one of:
- compiling a report indicative of the diagnosis and/or the action plan, and/or
- trigger an execution of the action plan.

As one example, the action plan may indicate a plan or strategy on how to gather additional diagnostic information, such as at least one of: requesting specific vehicles to run diagnostic routines, indicating to collect sensor data from specific locations of the worksite 100 such as during certain time periods, and/or indicating to test communication links between the one or more components 1, 2, 3, 4.

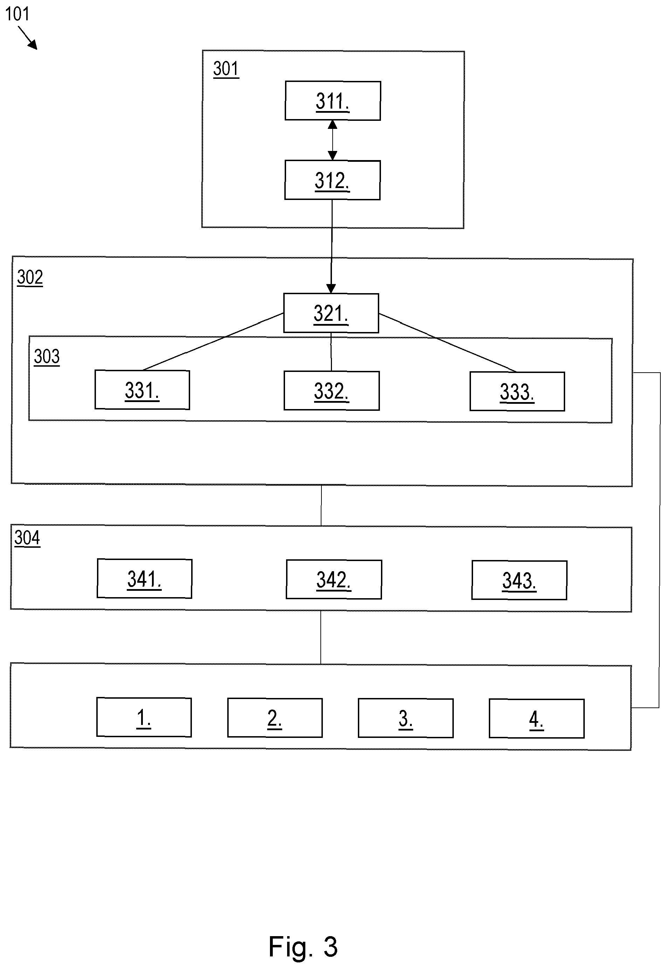

**FIG. 3** illustrates an example architecture implementation of the ATS 101 which will now be discussed.

In some examples the LLM-powered AI agent, e.g., used to perform at least some of the actions of examples herein, may be integrated into a central control system of the ATS 101, e.g., as part of the computer system 700. The LLM-powered AI agent may be designed to perform system-level fault diagnosis across multiple interacting components of the one or more components 1, 2, 3, 4. The examples herein may uniquely combine runtime behavior analysis with a deep understanding of system implementation, enabled by the AI agent's access to system data of the ATS 101, e.g., system source code, APIs, and documentation.

The ATS 101 may comprise any one or more of the following, e.g., as part of the computer system 700:
- A **site operator interface 301,** e.g., for interacting with the LLM, e.g., as part of the user interface 30.
   ∘ A **site operator 311,** e.g., the user 20 and/or the feedback entity 40.
   ∘ The **LLM 312** e.g., acting as an AI agent.
- An **analysis engine 302.**
   ∘ A **deep system analysis unit 321** coupled with and/or comprising **analysis mechanisms 303:**
      ▪ A **component analysis unit 331.**
      ▪ A **dependency mapping unit 332.**
      ▪ A **pattern detection unit 333.**
- **System implementation units 304.**
   ∘ **System codebase 341,** e.g., including program code for any one or more of the one or more components 1, 2, 3, 4
   ∘ **System APIs 342,** e.g., including APIs for controlling any one or more of the one or more components 1, 2, 3, 4
   ∘ **System documentation 343,** e.g., including documentation for any one or more functions or system of any one or more of the one or more components 1, 2, 3, 4.
- The one or more components 1, 2, 3, 4, e.g., which may have runtime access to any one or more of the system implementation units 304 and/or which may have functions and/or functionalities defined by any one or more of the system implementation units 304.

FIG. 3 illustrates specifically how the AI agent and/or LLM of examples herein may coordinate with multiple system components 301, 302, 303, 304, of the ATS 101 through any one or more out of the following three core analysis mechanisms 303:
- Component Analysis, e.g., by the component analysis unit 332 which may comprise Analyzing individual components of the ATS 101 and/or the one or more components 1, 2, 3, 4, such as by combining runtime diagnostics with source code understanding to identify potential and actual failure modes.
- Dependency Mapping, e.g., by the dependency mapping unit 332 which may comprise creating a unified view of component relationships through static code analysis and runtime behavior monitoring, e.g., identifying both explicit and implicit dependencies of the one or more components 1, 2, 3, 4.
- Pattern Detection, e.g., by the pattern detection unit 333, which may combine implementation patterns of the ATS 101 with runtime behavior of the ATS 101 to identify correlations and predict potential issues across the system.

Any one or more of the above-mentioned mechanisms may operate within the engine 302, e.g., which may be arranged to process information from both a system implementation layer of the ATS 101, e.g., a layer comprising the system implementation units 304 such as source code 341, APIs 342, documentation 343, and runtime data from the one or more components 1, 2, 3, 4, e.g., vehicles, infrastructure, control systems of the ATS 101.

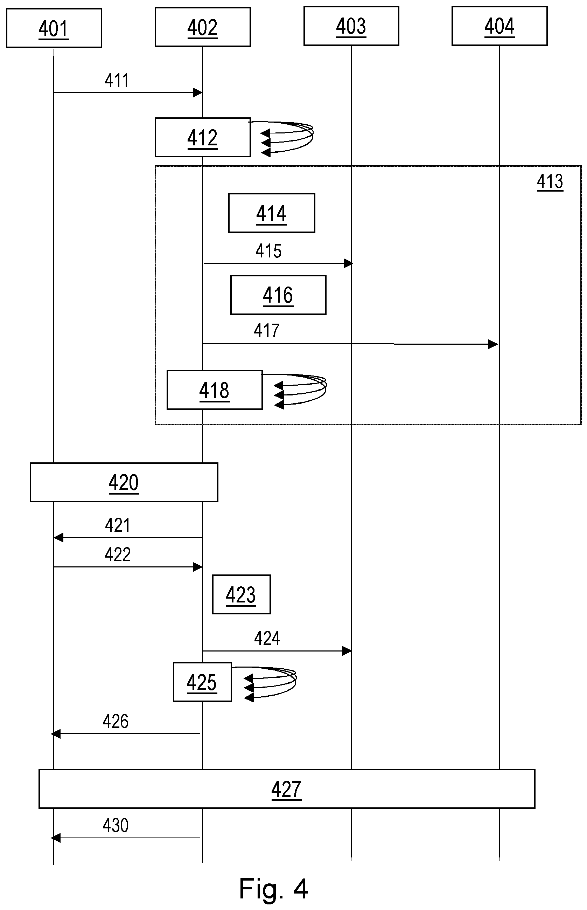

**FIG. 4** illustrates an example process of a diagnostics process where some mechanisms of examples and/or embodiments herein are illustrated, and how they may be applied in a concrete context.

The example process begins when an operator, e.g., the user 20, describes an issue to an AI agent, e.g., as part of Action 201.

The AI agent, e.g., powered by an LLM, e.g., the LLM 312, may proceed through systematic analysis phases, e.g., as part of any one or more of Actions 202-208, such as comprising at least one of:
- Initial fault processing utilizing component analysis, e.g., of the one or more components 1, 2, 3, 4, to understand affected systems of the ATS 101.
- Systematic relationship evaluation, e.g., of the one or more components 1, 2, 3, 4, through Dependency Mapping.
- Comprehensive pattern analysis combining implementation of at least part of the ATS 101 and/or and runtime data of at least part of the ATS 101 such as the vehicles 1.
- Iterative refinement based on operator feedback, e.g., the user 20 and/or the feedback entity 40, and continued monitoring of the ATS 101.

Dependency mapping as used herein may mean a process of identifying and documenting all relationships, dependencies, and interactions between the one or more components 1, 2, 3, 4, in the ATS 101, e.g., including explicit connections such as defined in a configuration and/or code and/or including implicit dependencies such as emergent from system operation of the ATS 101, to create a comprehensive model of how the one or more components 1, 2, 3, 4 affect each other's functionality and operation.

The process may comprise any one or more of the following Actions, which may be combined with any one or more of the above-mentioned Actions in any suitable manner.

A **site operator 401** of the work site 100, e.g., the operator 311, which in this example scenario is the user 20 and the feedback entity 40, may **describe 411** the issue with the ATS 101, e.g., as in action 201.

An **AI agent 402,** e.g., the LLM and/or AI agent described in relation to FIG. 2 and/or the LLM 312, may **process 412** the description of the issue, e.g., as part of action 202.

A **system analysis phase 413** may be performed by the AI agent 402, e.g., as part of actions 203-204. The system analysis phase 413 may establish the diagnosis and/or the action plan as in action 204 based on the system data.

In particular, the AI agent 402 may perform any one or more of: a **component analysis 414, dependency mapping 416,** and a **pattern detection 418,** e.g., as discussed above.

To perform the dependency mapping 416, data from any one or more of the one or more components 1, 2, 3, 4 may be **accessed 415** from **system data 403** of the ATS 101, and be used as basis for the dependency mapping 416.

To perform the pattern detection 418, data of component relationships from any one or more of the one or more components 1, 2, 3, 4 may be **accessed 417** from **system functions 404** of the ATS 101, and be used as basis for the pattern detection 418.

Any one or more of the above may result in establishing the diagnosis of the fault and/or the action plan, e.g., as in Action 204.

The AI agent 402 and the site operator 401 may enter an iterative **diagnosis loop 420,** e.g., as part of actions 405-407. The loop 420 may comprise the AI agent 402 **providing 421** the established diagnosis and/or action plan, e.g., of Action 204, to the site operator 401, for feedback. The site operator 401 may **provide 422** feedback to the AI agent 402, e.g., more information of the issue which may have been requested by the AI agent 402 via the action plan.

The AI agent 402 may **rerun 423** any one or more mechanisms as above and may **update 424** any system data if necessary, e.g., based on the feedback of the site operator 401.

The diagnosis may be **re-established 425** by the AI agent 402, e.g., as in Action 207.

The AI agent 402 may **provide 426** the re-established diagnosis and/or action plan to the site operator 401.

The loop 420 may be **continued 427,** e.g., until the site operator 401 approves of the diagnosis of the fault of the ATS 101.

A final comprehensive analysis e.g., indicative of the (re)established diagnosis of the fault of the ATS 101 may be **transmitted 430** to the site operator 401.

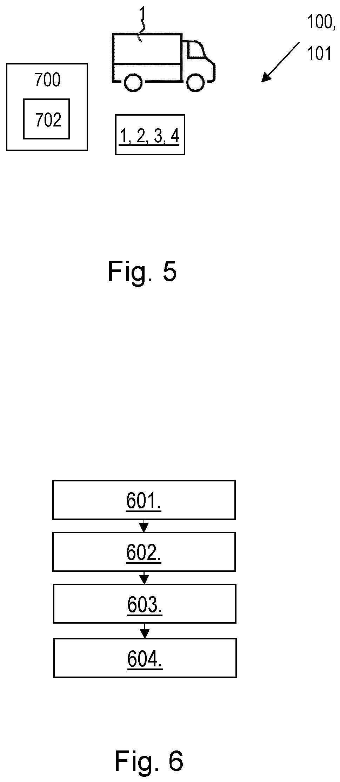

**FIG. 5** is another view of **FIG. 1****,** according to an example. The computer system 700 comprising processing circuitry 702 is configured to handle the ATS 101. The ATS 101 is arranged to manage the plurality of autonomous vehicles 1 operating at the work site 100.

The processing circuitry 702 is configured to receive a natural language input indicative of an issue associated with the ATS 101.

The processing circuitry 702 is configured to interpret from the natural language input, by using a machine learning model at least partly trained to handle natural language inputs, the issue associated with the ATS 101. The machine learning model may be an LLM.

The processing circuitry 702 is configured to obtain system data of the ATS 101. The system data is indicative of at least one of:
- a system architecture of the ATS 101,
- runtime information of one or more components 1, 2, 3, 4 of the ATS 101, and
- a relationship information between the one or more components 1, 2, 3, 4.

The processing circuitry 702 is configured to, based on the interpreted issue and the system data, establish a diagnosis of a fault associated with the interpreted issue and/or establish an action plan for handling the interpreted issue.

**FIG. 6** is a flow chart of an exemplary computer-implemented method for handling the ATS 101. The ATS 101 is arranged to manage the plurality of autonomous vehicles 1 operating at the work site 100.

The below method actions may be combined with any examples herein in any suitable manner.
**Action 601.** The method comprises, by a processing circuitry 702 of a computer system 700, receiving 201, 601 a natural language input indicative of an issue associated with the ATS 101,
**Action 602.** The method comprises, by the processing circuitry 702, interpreting 202, 602 from the natural language input, by using a machine learning model at least partly trained to handle natural language inputs, the issue associated with the ATS 101. The machine learning model may be an LLM.

**Action 603.** The method comprises, by the processing circuitry 702, obtaining system data of the ATS 101. The system data is indicative of at least one of:
- a system architecture of the ATS 101,
- runtime information of one or more components 1, 2, 3, 4 of the ATS 101, and
- a relationship information between the one or more components 1, 2, 3, 4.

**Action 604.** The method comprises, by the processing circuitry 702 and based on the interpreted issue and the system data, establishing a diagnosis of a fault associated with the interpreted issue and/or establish an action plan for handling the interpreted issue.

### Further variations and Examples

Examples herein may include at least one of:
- LLM-based source code comprehension for understanding system implementation of the ATS 101,
- Real-time data collection and analysis through system APIs,
- Natural language processing for operator interaction, e.g., with the user 20 and/or the feedback entity 40.
- Dynamic feedback processing for iterative diagnosis, e.g., as in actions 205-207
- System-wide monitoring and analysis capabilities, e.g., by allowing the Examples herein to have the LLM utilize the system data of the ATS 101 to diagnose the fault of the ATS 101.

Examples herein may in particular allow for at least one of the following:
- System-Level Failure Pattern Detection, e.g., where a fault such as a failure may be diagnosed which only manifest through component interactions between the one or more components 1, 2, 3, 4.
- Cross-Component Dependency Analysis, e.g., where a fault may be diagnosed of cascading effects across different components of the one or more components 1, 2, 3, 4.
- Adaptive Diagnostic Refinement, e.g., where the diagnosis of the fault may be iteratively improved through feedback, e.g., as in Actions 205-207.
- Predictive Dependency Analysis, e.g., where the fault may be diagnosed before runtime manifestation, e.g., via code analysis.

### Practical Example Scenario: Electromagnetic Interference Case

To illustrate operations of the ATS 101, below we consider an example scenarios where multiple components of the one or more components 1, 2, 3, 4 show subtle performance issues, e.g., as obtained in action 201.

### Initial Situation:

In the example scenario, two autonomous vehicles 1 report slight deviations from planned paths in a specific area of the work site 100.

In the example scenario, a traffic light system of the one or more traffic systems 4 shows occasional delays in state switching.

In the example scenario, a wireless charging pad of the one or more components 1, 2, 3, 4, reports fluctuating power output levels.

In the example scenario, e.g., as part of establishing the diagnosis as part of any of actions 204-207, a Component Analysis Phase may be performed which may include any one or more out of:
- Analyze runtime behavior where all components 1, 2, 3, 4 operate within individual tolerance limits.
- Analyze source code implementation which identifies that all affected systems use similar electromagnetic sensor libraries and communication protocols.
- Analyze component-specific diagnostics which indicates no internal faults detected in any single component.

In the example scenario, e.g., as part of establishing the diagnosis as part of any of actions 204-207, a Dependency Mapping Phase may be performed which may include any one or more out of:
- Mapping physical proximity of at least one of the one or more components 1, 2, 3, 4 through infrastructure layout data,
- Identifying shared dependencies in source code:
   o Vehicle navigation system's GPS signal processing of the two vehicles 1
   o Traffic light's communication module implementation of the traffic light system,
   o Charging pad's power converter control logic.
- The dependencies may identify that all components use similar or same frequency bands for operation.

In the example scenario, e.g., as part of establishing the diagnosis as part of any of actions 204-207, a Pattern Detection Phase may be performed which may include any one or more out of:
- Correlating temporal occurrence of the issues of the components 1, 2, 3, 4.
- Mapping geographical distribution of affected components of the one or more components 1, 2, 3, 4.
- Analyzing implementation similarities in affected components 1, 2, 3, 4.
- Identifying pattern: All issues occur in components 1, 2, 3, 4, with electromagnetic sensitivity.
- Cross-referencing with environmental factors in the area of the work site 100.

In the example scenario, e.g., as part of establishing the diagnosis as part of any of actions 205-207, an Iterative Refinement may be performed which may include any one or more out of:
- Initial diagnosis suggests electromagnetic interference.
- Operator feedback, e.g., feedback information of the feedback entity 40, confirms presence of new industrial equipment nearby.
- The diagnosis of the fault is refined to map interference patterns.
- Providing specific mitigation recommendations based on component implementations.

This diagnosis would be impossible without the integrated analysis of both system data of the ATS, e.g., including information of the ATS 101 implementation, as well as runtime behavior of the ATS 101, as no single component shows clear failure in the example scenario. The root cause of the fault only becomes apparent when analyzing the ATS 101 as a whole, combining code-level understanding with operational data.

A conclusion to be made may be that the system data as used in the examples above, e.g., as in Action 204 to diagnose the fault, may be crucial to be able to accurately detect at least some faults of the ATS 101.

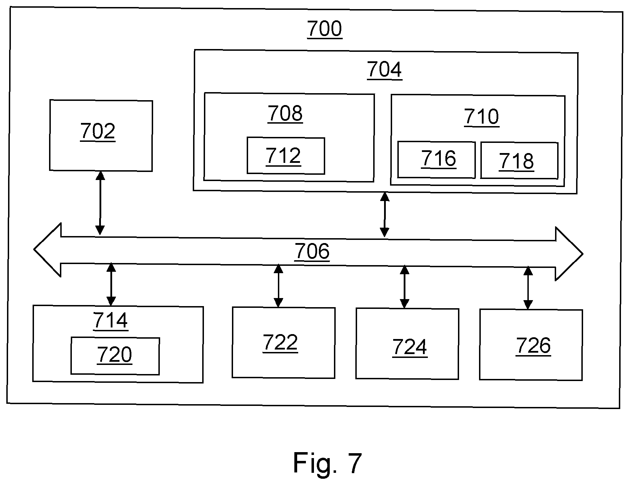

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 702 may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system 716 and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of **Examples 1-20.** The below Examples 1-20 may be combined with any of the examples above, or with the subject matter of the attached claims, in any suitable manner.
**Example 1.** A computer system (700) comprising processing circuitry (702) configured to handle an Autonomous Transport System, ATS, (101), wherein the ATS (101) is arranged to manage a plurality of autonomous vehicles (1) operating at a work site (100), and wherein the processing circuitry (702) is configured to:
   - receive a natural language input indicative of an issue associated with the ATS (101),
   - interpret from the natural language input, by using a machine learning model at least partly trained to handle natural language inputs, the issue associated with the ATS (101),
   - obtain system data of the ATS (101), the system data being indicative of at least one of: a system architecture of the ATS (101), runtime information of one or more components (1, 2, 3, 4) of the ATS (101), and a relationship information between the one or more components (1, 2, 3, 4), and,
   - based on the interpreted issue and the system data, establish a diagnosis of a fault associated with the interpreted issue and/or establish an action plan for handling the interpreted issue.
**Example 2.** The computer system (700) of Example 1, wherein the processing circuitry is further configured to:
   - provide the established diagnosis and/or action plan to a feedback entity (40),
   - receive a response from the feedback entity (40) indicative of feedback information of the diagnosis and/or the action plan, the feedback information being indicative of whether or not there is a need to re-establish the diagnosis and/or to re-establish the action plan.
**Example 3.** The computer system (700) of Example 2, wherein the processing circuitry is further configured to:
   - based on the feedback information, re-establish the diagnosis of the fault associated with the interpreted issue and/or to re-establish action plan for handling the interpreted issue.
**Example 4.** The computer system (700) of Example 3, wherein re-establishing the diagnosis and/or re-establishing the action plan is performed iteratively until a termination condition, and wherein re-establishing the diagnosis and/or re-establishing the action plan comprises iteratively obtaining updated feedback information from the feedback entity (40).
**Example 5.** The computer system (700) of Example 4, wherein the terminating condition comprises that the feedback information indicates an approval by the feedback entity (40).
**Example 6.** The computer system (700) of any of Examples 2-5, wherein when the feedback information is indicative of that the diagnosis and/or action plan is approved, trigger at least one of:
   - compiling a report indicative of the diagnosis and/or the action plan, and/or
   - trigger an execution of the action plan.
**Example** 7. The computer system (700) of any of the preceding Examples, wherein the system data is further indicative of at least one of:
   - historical and/or current runtime data of the ATS (101),
   - an Application Programming Interface, API, of the ATS (101),
   - implementation information of the ATS (101),
   - a codebase of the ATS (101), and
   - documentation of the ATS (101) .
**Example 8.** The computer system (700) of any of the preceding Examples, wherein the one or more components (1, 2, 3, 4) comprises at least one of:
   - the plurality of vehicles (1),
   - one or more infrastructure entities (2) of the work site (100),
   - one or more control systems (3) of the ATS (101) and/or the work site (100), and
   - one or more traffic systems (4) of the work site (100).
**Example 9.** The computer system (700) of any of the preceding Examples, wherein establishing the diagnosis and/or the action plan comprises analysing the runtime information of the one or more components (1, 2, 3, 4) with associated program code of the one or more components (1, 2, 3, 4).
**Example 10.** The computer system (700) of any of the preceding Examples, wherein establishing the diagnosis and/or the action plan comprises analysing the runtime information of the one or more components (1, 2, 3, 4) and relationship information between the one or more components (1, 2, 3, 4).
**Example 11.** The computer system (700) of any of the preceding Examples, wherein the natural language request is received as input by a voice command.
**Example 12.** The computer system (700) of any of the preceding Examples, configured to at least partly utilize a Large Language Model, LLM, to perform at least one of:
   receive the natural language input, interpret the issue, obtain the system data,
   establish the diagnosis, and establish the action plan.
**Example 13.** The computer system (700) of any of the preceding Examples, wherein the computer system (700) comprises at least part of and/or is configured to control the ATS (101).
**Example 14.** An autonomous vehicle (1) configured to at least partly comprise and/or at least partly be controlled by the computer system (700) of any of Examples 1-13.
**Example 15.** A computer-implemented method for handling an Autonomous Transport System, ATS (101), wherein the ATS (101) is arranged to manage a plurality of autonomous vehicles (1) operating at a work site (100), and wherein the method comprises:
   - by a processing circuitry (702) of a computer system (700), receiving (201, 601) a natural language input indicative of an issue associated with the ATS (101),
   - by the processing circuitry (702), interpreting (202, 602) from the natural language input, by using a machine learning model at least partly trained to handle natural language inputs, the issue associated with the ATS (101),
   - by the processing circuitry (702), obtaining (203, 603) system data of the ATS (101), the system data being indicative of at least one of: a system architecture of the ATS (101), runtime information of one or more components (1, 2, 3, 4) of the ATS (101), and a relationship information between the one or more components (1, 2, 3, 4), and,
   - by the processing circuitry (702) and based on the interpreted issue and the system data, establishing (204, 604) a diagnosis of a fault associated with the interpreted issue and/or establish an action plan for handling the interpreted issue.
**Example 16.** The method of Example 15, further comprising:
   - by the processing circuitry (702), providing (205) the established diagnosis and/or action plan to a feedback entity (40),
   - by the processing circuitry (702), receiving (206) a response from the feedback entity (40) indicative of feedback information of the diagnosis and/or the action plan, the feedback information being indicative of whether or not there is a need to re-establish the diagnosis and/or to re-establish the action plan.
**Example 17.** The method of Example 16 further comprising:
   - by the processing circuitry (702) and based on the feedback information, re-establishing (207) the diagnosis of the fault associated with the interpreted issue and/or to re-establish action plan for handling the interpreted issue.
**Example 18.** The method of Example 17, wherein re-establishing (207) the diagnosis and/or re-establishing the action plan is performed iteratively until a termination condition, and wherein re-establishing the diagnosis and/or re-establishing the action plan comprises iteratively obtaining updated feedback information from the feedback entity (40).
**Example 19.** A computer program product comprising program code for performing, when executed by the processing circuitry (702), the method of any of Examples 15-18
**Example 20.** A non-transitory computer-readable storage medium comprising instructions, which when executed by the processing circuitry (702), cause the processing circuitry (702) to perform the method of any of Examples 15-18.
**Example 21.** An autonomous Transport System, ATS, (101) arranged to manage a plurality of autonomous vehicles (1) operating at a work site (100), and wherein the ATS (101) comprises and/or is controlled by the computer system and/or the processing circuitry (702) according to any of Examples 1-14.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) comprising processing circuitry (702) configured to handle an Autonomous Transport System, ATS, (101) wherein the ATS (101) is arranged to manage a plurality of autonomous vehicles (1) operating at a work site (100), and wherein the processing circuitry (702) is configured to:
o receive a natural language input indicative of an issue associated with the ATS (101),
o interpret from the natural language input, by using a machine learning model at least partly trained to handle natural language inputs, the issue associated with the ATS (101),
∘ obtain system data of the ATS (101), the system data being indicative of at least one of: a system architecture of the ATS (101), runtime information of one or more components (1, 2, 3, 4) of the ATS (101), and a relationship information between the one or more components (1, 2, 3, 4), and,
o based on the interpreted issue and the system data, establish a diagnosis of a fault associated with the interpreted issue and/or establish an action plan for handling the interpreted issue.

2. The computer system (700) of claim 1, wherein the processing circuitry is further configured to:
o provide the established diagnosis and/or action plan to a feedback entity (40),
o receive a response from the feedback entity (40) indicative of feedback information of the diagnosis and/or the action plan, the feedback information being indicative of whether or not there is a need to re-establish the diagnosis and/or to re-establish the action plan.

3. The computer system (700) of claim 2, wherein the processing circuitry is further configured to:
o based on the feedback information, re-establish the diagnosis of the fault associated with the interpreted issue and/or to re-establish the action plan for handling the interpreted issue.

4. The computer system (700) of claim 3, wherein re-establishing the diagnosis and/or re-establishing the action plan is performed iteratively until a termination condition is fulfilled, and wherein re-establishing the diagnosis and/or re-establishing the action plan comprises iteratively obtaining updated feedback information from the feedback entity (40); and optionally, wherein the terminating condition comprises that the feedback information indicates an approval by the feedback entity (40).

5. The computer system (700) of any of claims 2-4, wherein when the feedback information is indicative of that the diagnosis and/or action plan is approved, trigger at least one of:
o compiling a report indicative of the diagnosis and/or the action plan, and/or
o an execution of the action plan.

6. The computer system (700) of any of the preceding claims, wherein the system data is further indicative of at least one of:
o historical and/or current runtime data of the ATS (101),
o an Application Programming Interface, API, of the ATS (101),
o implementation information of the ATS (101),
o a codebase of the ATS (101), and
o documentation of the ATS (101) .

7. The computer system (700) of any of the preceding claims, wherein the one or more components (1, 2, 3, 4) comprises at least one of:
o the plurality of vehicles (1),
o one or more infrastructure entities (2) of the work site (100),
o one or more control systems (3) of the ATS (101) and/or the work site (100), and
o one or more traffic systems (4) of the work site (100).

8. The computer system (700) of any of the preceding claims, wherein establishing the diagnosis and/or the action plan comprises analysing the runtime information of the one or more components (1, 2, 3, 4) with associated program code of the one or more components (1, 2, 3, 4).

9. The computer system (700) of any of the preceding claims, wherein establishing the diagnosis and/or the action plan comprises analysing the runtime information of the one or more components (1, 2, 3, 4) and relationship information between the one or more components (1, 2, 3, 4).

10. The computer system (700) of any of the preceding claims, wherein the natural language request is received as input at least partly by a voice command.

11. The computer system (700) of any of the preceding claims, configured to at least partly utilize a Large Language Model, LLM, to perform at least one of: receive the natural language input, interpret the issue, obtain the system data, establish the diagnosis, and establish the action plan; and/or, wherein the computer system (700) comprises at least part of and/or is configured to control the ATS (101) .

12. An autonomous vehicle (1) comprising and/or being controlled by the computer system (700) of any of claims 1-11.

13. A computer-implemented method for handling an Autonomous Transport System, ATS (101), wherein the ATS (101) is arranged to manage a plurality of autonomous vehicles (1) operating at a work site (100), and wherein the method comprises:
o by processing circuitry (702) of a computer system (700), receiving (201, 601) a natural language input indicative of an issue associated with the ATS (101),
o by the processing circuitry (702), interpreting (202, 602) from the natural language input, by using a machine learning model at least partly trained to handle natural language inputs, the issue associated with the ATS (101),
o by the processing circuitry (702), obtaining (203, 603) system data of the ATS (101), the system data being indicative of at least one of: a system architecture of the ATS (101), runtime information of one or more components (1, 2, 3, 4) of the ATS (101), and a relationship information between the one or more components (1, 2, 3, 4), and,
o by the processing circuitry (702) and based on the interpreted issue and the system data, establishing (204, 604) a diagnosis of a fault associated with the interpreted issue and/or establish an action plan for handling the interpreted issue.

14. A computer program product comprising program code for performing, when executed by the processing circuitry (702), the method of claim 13.

15. A non-transitory computer-readable storage medium comprising instructions, which when executed by the processing circuitry (702), cause the processing circuitry (702) to perform the method of claim 13.
